**Europäisches Patentamt**

**European Patent Office**

**Office européen des brevets**

(19)

(11) Publication number : **0 462 254 B1**

(12)

# EUROPEAN PATENT SPECIFICATION

(45) Date of publication of patent specification :
13.07.94 Bulletin 94/28

(51) Int. Cl.⁵ : **H04B 3/23, H04M 9/08**

(21) Application number : **91902139.4**

(22) Date of filing : **21.12.90**

(86) International application number :
**PCT/EP90/02264**

(87) International publication number :
**WO 91/11060 25.07.91 Gazette 91/17**

(54) **ECHO CANCELLER.**

(30) Priority : **10.01.90 GB 9000525**

(43) Date of publication of application :
**27.12.91 Bulletin 91/52**

(45) Publication of the grant of the patent :
**13.07.94 Bulletin 94/28**

(84) Designated Contracting States :
**AT BE CH DE DK ES FR GB GR IT LI LU NL SE**

(56) References cited :
**EP-A- 0 107 122**
**EP-A- 0 282 393**
**EP-A- 0 333 581**
**EP-A-03 016 27**
**US-A- 4 578 543**

(73) Proprietor : **MOTOROLA, INC.**
**1303 East Algonquin Road**
**Schaumburg, IL 60196 (US)**

(72) Inventor : **THRANE, Morten**
**Skovstykket 17**
**DK-2830 Virum (DK)**
Inventor : **PETERSEN, Kim, Tilgaard**
**Godthabsvej 50 4 TV**
**DK-2000 Frederiksberg (DK)**

(74) Representative : **Dunlop, Hugh Christopher et al**
**Motorola**
**European Intellectual Property Operations**
**Jays Close**
**Viables Industrial Estate**
**Basingstoke, Hampshire RG22 4PD (GB)**

# Description

## Background to the Invention

This invention relates to an echo canceller such as for use in a full duplex hands free radio. The echo canceller is particularly suitable for use in a vehicle fitted with a microphone and a loudspeaker, for cancelling echos reaching the radio microphone from the radio loudspeaker.

The echo canceller is useful in any system having large transmission delays in the order of 100 msec particularly useful for GSM cellular subscriber equipment.

The GSM cellular radio system calls for standards in cancellation of echos not reached in previous systems. In particular, in the GSM system the up link/down link transmission delay can be of the order of 100 milliseconds, which is considerably more than in traditional cellular. The echo tends to become more annoying as the transmission delay increases so that GSM systems require improvements in this field.

## Summary of the Prior Art

A method of adaptive filtering in sub-bands is described in a paper of that title by Andre Gilloire and Martin Vetterli, published in IEEE bulletin D6.6 of 1988, at page 1572. The paper concludes that the computational complexity of adaptive filtering is improved nearly proportional to the number of sub-bands, and the convergence speed is improved as well, making the scheme described attractive for application like acoustic echo cancellation. EP-A-0 333 581 discloses a sub-band echo canceller wherein momentary blocking of the filter adaptation is controlled in dependence upon a signal produced by a local speaker.

It is an object of the present invention to provide an improved echo canceller, especially one which allows for full duplex operation with good echo suppression.

## Summary of the Invention

According to the present invention, there is provided an echo canceller comprising an output path for outputting desired signals (eg. through a loudspeaker) and an input path for receiving desired signals (eg. through a microphone) together with undesired echos from the output path. The output path has a plurality of sub-band channels connected thereto for receipt of signals therefrom, each of said channels having an adaptive filter, and the input path has a plurality of sub-band channels and means for cancelling said echos by compensating the signal thereon as a function of the filtered signals from the filters, characterised by means for initiating and suspending the adjustment of each channel filter coefficient as a function of the signal on that channel.

Adjustment of the filter coefficient (or coefficients) may be dependent on a number of factors. In a first embodiment, the adjustment is temporarily disabled when the level of the signal on the output path (the loudspeaker signal) is below a pre-determined threshold. In a second embodiment, the adjustment disabled when the level of the signal on the input path (through the microphone) is above a predetermined threshold.

In a third embodiment adjustment is temporarily disabled when there is a desired signal on the input path and no desire signal on the output path (ie. the near end talker is active alone).

In a fourth embodiment, adjustment is suspended when there is a desired signal on the output path and a desired signal, other than echos, on the input path ie both the near end and far end talkers are active.

A preferred embodiment of the invention will be described, with reference to the accompanying drawings, in which:

Fig 1 shows an echo canceller in accordance with the invention and

Fig 2 shows a block diagram of a control algorithm for control of the adaptive filtering in the echo canceller of Fig 1.

## Detailed description of the preferred embodiment

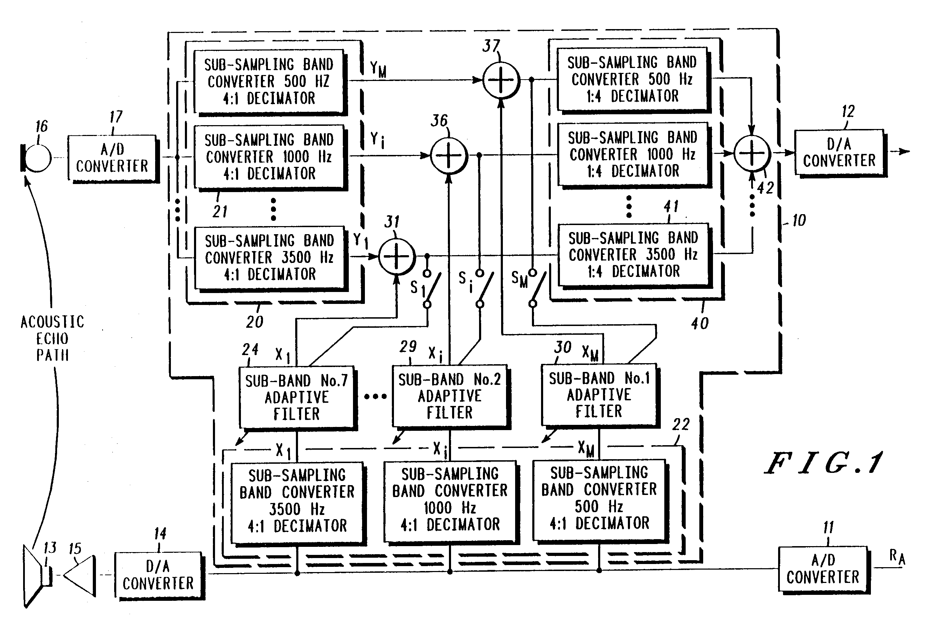

Referring to Fig 1, there is shown an echo canceller as part of a duplex GSM mobile radio. The echo canceller is shown in dotted outline 10 and is implemented in a digital signal processor such as a DSP 56001 of Motorola Inc or two such processors as necessary. The echo canceller is connected to a transceiver (not shown) at the right hand side of the figure by means of analog-to-digital converter 11 and digital-to-analog converter 12 and is connected to a microphone 13 by means of digital-to- analog converter and power amplifier 15 and to a microphone 16 by means of analog-to-digital converter 17. The converters 11 and 14, the amplifier 15 and the loudspeaker 13 make up the "output path". The microphone 16, converter 17, echo canceller 10 and converter 12 make up the "input path". There is an acoustic echo path between the loudspeaker 13 and the microphone 16 which gives rise to unwanted echos at the microphone 16. It is the purpose of the echo canceller 10 to suppress echos received at the microphone from the loudspeaker.

The inventors have found that the performance of the echo canceller is improved if the speech frequency band is divided into seven sub-bands covering the area from 250 Hz to 3750 Hz giving 500 Hz sub bands. Each sub band has associated with it a complete echo canceller system and a synthesize filter. In the figure, the sub-bands are referred to as 1 to M. The echo canceller 10 comprises an analyse filter bank 20 made up of seven sub-sampling-band (SSB) converters 21, each having a 4:1 decimator. There is a similar analyse filter bank 22 comprising seven SSB converters and 4:1 decimators connected for receipt of signals from the A/D converter 11 on the output path. The signals X1 to XM from the analyse filter bank 22 are passed to seven sub band adaptive FIR filters 24 to 30. These filters delay the signals X1 to XM by up to 30 milliseconds. The signals from the filters 24 to 30 are subtracted from the signals from the analyse filter banks by means of mixers 31 to 37. The analyse filter bank 20 is designed to be equal to analyse filter bank 22. Provided that the response of filter 24-30 matches the combined response of loudspeaker, echo path, microphone, and filter bank, the subtraction of these signals will provide echo suppression. From the resulting signals, a final signal is synthesized in synthesize filter bank 40. This filter bank comprises seven SSB converters 41 each providing 1:4 interpolation. The signals from the seven sub-bands are added in mixer 42 and converted to analog form in D/A converter 12, for transmission in the GSM mobile transmitter (not shown).

Each of the sub-band FIR filters 21 to 30 is adaptive, in that the coefficients of those filters are dynamically adjustable in accordance with the above mentioned paper by Gilloire and Vetterli. In the preferred embodiment of the present invention, feedback is provided within each sub band from the output of the mixers 31 to 37 to the sub-band FIR filters 24 to 30. The feedback in each sub band causes the adaptive FIR filter in that sub-band to update its coefficients as a function of the signal on the input path in that sub band after echo suppression. The update algorithm is based on the least mean square of the signal, as described in "A Stochastic Approximation Method", Annals of Mathematical Statistics, Vol 22, pp400-407, 1959, M.Robbins, & S.Monroe. A control algorithm is provided to temporarily disable updating of the coefficients in each of the FIR filters. (To put this another way, the state of the FIR filter is temporarily frozen). This is represented in Fig 1 by switches S1 to SM, however, it will be understood that these "switches", as with all the other elements shown within the dotted line of the echo canceller 10, are implemented in software.

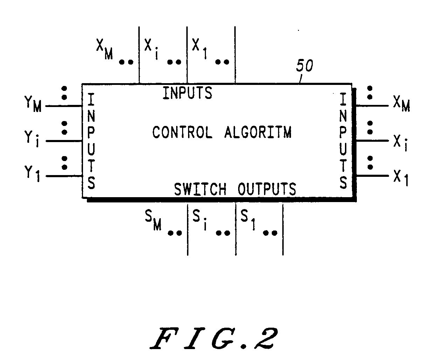

The algorithm controlling the suspension of coefficient updating is shown in block diagram form in Fig 2 as algorithm 50. The algorithm has as its inputs the signals from the analyse filter bank 20 (signals Y1 to YM), the signals from the sub-band adaptive FIR filters 24 to 30 (signals X1 to XM) and the inputs from the analyse filter bank 22 (signals X1 to XM).

The controller algorithm is based on calculating the signal energy of the different sub band signals. These calculations are based on averaging the sub band signals by filtering the absolute value of the samples in a second order IIR filter, with cut off frequency FC=50Hz.

The coefficients of the FIR filters are not up dated when:

1. The level of the loudspeaker signal is below a fixed threshold;.

2. The level of the microphone signal is above a fixed threshold;.

3. The near end talker is active alone; or

4. Both the near end and the far end talker are active - double talk.

In order to meet the conditions 1 and 2, the sub band energies are compared with fixed thresholds. A time delay is added to prevent sudden spikes and low level samples from stopping the updating process.

Double talk, as described under points 3 and 4 above, is detected by calculating the cross correlation between the microphone sub band signal Yi and the sub band signal Xi estimated by the echo canceller - see Figure 1. The cross correlation is calculated from:

$$Si \ = \ \frac{E[Xi(n) \ . \ Yi(n)]}{\sqrt{E[Xi^2(n)] \ . \ E[Yi^2(n)]}} \ ; \ i \ = \ 1, 2..M$$

The normalization is performed in order to make the correlation independent of the absolute signal levels and to limit the correlation to the interval [0;1]. E[.] symbolizes the aforementioned energy calculation.

In order to decide whether the current sub-band contains double talk or not, the cross correlation factor is compared to a fixed threshold. The value of the threshold is chosen with respect to the current sub-band. Updating is performed whenever the cross correlation is greater than the threshold.

The invention has the advantage that by controlling each sub band separately, it is possible to stop updating the coefficients in only those frequency bands where double talk is actually present. Thereby, it is possible to achieve echo cancelling even under conditions were the full band echo canceller would have stopped updating. As a result, the invention provides an improved echo canceller.

It will, of course, be understood that the above description has been given by way of example only, and that modifications of detail can be made within the scope of the invention.

## Claims

1. An echo canceller comprising an output path (11, 14, 15, 13) for outputting desired signals and an input path (16, 17, 10, 12) for receiving desired signals together with undesired echos from the output path, the output path having a plurality of sub-band channels ($X_1$-$X_M$) connected thereto for receipt of signals therefrom, each of said channels having an adaptive filter (24, 29,30), a time delay coefficient of which is dynamically adjustable, and the input path having a plurality of subband channels ($Y_1$-$Y_M$) and means for cancelling said echos by compensating the signal on each channel as a function of the signal from the filter, characterised by means ($S_1$, $S_i$, $S_M$) for initiating and suspending the adjustment of the said coefficient of each channel filter as a function of the signal on that channel ($X_1$-$X_M$ and/or $Y_1$-$Y_M$).

2. An echo canceller according to claim 1, wherein means are provided for measuring the signal level on a channel of the output path and suspending adjustment of said coefficient when said signal is below a predetermined threshold.

3. An echo canceller according to claim 1 or 2, wherein means are provided for measuring the signal level on a channel ($Y_1$-$Y_M$) of the input path and suspending adjustment of the filter coefficient when the signal on that path is above a predetermined second threshold.

4. An echo canceller according to claim 1, wherein means are provided for measuring the signals on a channel of the output and input paths and suspending adjustment of said coefficient when there is a desired signal on the input path channel ($Y_1$-$Y_M$) and no desired signal on the output path channel ($X_1$-$X_M$).

5. An echo canceller according to claim 1, wherein means are provided for measuring the signals on a channel of the output and input paths and suspending adjustment of said coefficient when there is a desired signal on the output path channel and a desired signal, other than echos, on the input path channel.

6. An echo canceller according to any one of the preceding claims, characterised in that there are from four to twelve channels connected to the output path and an equal number of channels in the input path.

7. An each canceller according to claim 6, wherein there are from six to eight such channels.

8. An echo canceller according to claim 6 or 7, wherein the channels span the frequency range from about 250 Hz to about 3750 Hz in approximately equal sub-bands.

9. An echo canceller according to any one the preceding claims in combination with a duplex transceiver, wherein the output path includes a loudspeaker (13) for audio output of received signals, the input path includes a microphone (16) for audio input of signals for transmission, the echo canceller is arranged to cancel echos in the microphone originating from the loudspeaker, and the means for initiating and suspending the adjustment of the filter coefficient is arranged to suspend said adjustment during full duplex operation.

10. An echo canceller and transceiver according to claim 9, when installed in a vehicle.

**Patentansprüche**

1. Echounterdrücker, der einen Ausgabeweg (11, 14, 15, 13) zur Ausgabe gewünschter Signale sowie einen Eingabeweg (16, 17, 10, 12) zum Empfang gewünschter Signale zusammen mit unerwünschten Echos aus dem Ausgabeweg umfaßt, wobei an den Ausgabeweg eine Vielzahl von Teilbandkanälen ($X_1$-$X_M$) zum Empfang von Signalen daraus angeschlossen sind, wobei jeder der Kanäle ein adaptives Filter (24, 29, 30) aufweist, dessen Zeitverzögerungskoeffizient dynamisch einstellbar ist, und der Eingabeweg eine Vielzahl von Teilbandkanälen ($Y_1$-$Y_M$) sowie eine Einrichtung zum Unterdrücken der Echos durch Kompensation des Signals auf jedem Kanal als Funktion des Signals von dem Filter aufweist, **gekennzeichnet durch** Einrichtungen ($S_1$, $S_i$, $S_M$) zum Auslösen und Aussetzen der Einstellung des Koeffizienten jedes Kanalfilters als Funktion des Signals auf diesem Kanal ($X_1$-$X_M$ und/oder $Y_1$-$Y_M$).

2. Echounterdrücker nach Anspruch 1, wobei eine Einrichtung vorhanden ist, die den Signalpegel auf einem Kanal des Ausgabeweges mißt und die Einstellung des Koeffizienten aussetzt, wenn das Signal unter einem vorgegebenen Schwellenwert liegt.

3. Echounterdrücker nach Anspruch 1 oder 2, wobei eine Einrichtung vorhanden ist, die den Signalpegel auf einem Kanal ($Y_1$-$Y_M$) des Eingabeweges mißt und die Einstellung des Filterkoeffizienten aussetzt, wenn das Signal auf diesem Weg über einem zweiten vorgegebenen Schwellenwert liegt.

4. Echounterdrücker nach Anspruch 1, wobei eine Einrichtung vorhanden ist, die die Signale auf einem Kanal des Eingabe- und des Ausgabeweges mißt und die Einstellung des Koeffizienten aussetzt, wenn ein gewünschtes Signal auf dem Eingabewegkanal ($Y_1$-$Y_M$) vorhanden ist und kein gewünschtes Signal auf dem Ausgabewegkanal $(X_1-X_M)$.

5. Echounterdrücker nach Anspruch 1, wobei eine Einrichtung vorhanden ist, die die Signale auf einem Kanal des Ausgabe- und des Eingabeweges mißt und die Einstellung des Koeffizienten aussetzt, wenn ein gewünschtes Signal auf dem Ausgabewegkanal vorhanden ist und ein von Echos verschiedenes gewünschtes Signal auf dem Eingabewegkanal.

6. Echounterdrücker nach einem der vorangehenden Ansprüche, **dadurch gekennzeichnet,** daß zwischen vier und zwölf Kanäle an den Ausgabeweg angeschlossen sind, sowie eine gleiche Anzahl von Kanälen an den Eingabeweg.

7. Echounterdrücker nach Anspruch 6, wobei zwischen sechs bis acht derartiger Kanäle vorhanden sind.

8. Echounterdrücker nach Anspruch 6 oder 7, wobei die Kanäle den Frequenzbereich von ungefähr 250 Hz bis ungefähr 3750 Hz in annähernd gleichen Teilbändern abdekken.

9. Echounterdrücker nach einem der vorangehenden Ansprüche in Kombination mit einem Duplex-Sendeempfänger, wobei der Ausgabeweg einen Lautsprecher (13) zur Tonausgabe empfangener Signale enthält, der Eingabeweg ein Mikrophon (16) zur Toneingabe von Signalen zum Senden enthält, der Echounterdrücker aus dem Lautsprecher stammende Echos im Mikrophon unterdrückt, und die Einrichtung zum Auslösen und Aussetzen der Einstellung des Filterkoeffizienten die Einstellung während des vollen Duplexbetriebes aussetzt.

10. Echounterdrücker und Sendeempfänger nach Anspruch 9, wenn sie in einem Fahrzeug installiert sind.

## Revendications

1. Suppresseur d'échos comprenant un trajet de sortie (11, 14, 15, 13) servant à délivrer des signaux voulus et un trajet d'entrée (16, 17, 10, 12) servant à recevoir des signaux voulus en même temps que des échos non voulus venant du trajet de sortie, le trajet de sortie comportant une pluralité de voies de sous-bandes $(X_1-X_M)$ qui lui sont connectées pour la réception de signaux en provenant, chacune desdites voies ayant un filtre adaptatif (24, 29, 30), dont le coefficient de retard temporel peut être ajusté dynamiquement, et le trajet d'entrée comportant une pluralité de voies de sous-bandes $(Y_1-Y_M)$ et des moyens servant à supprimer lesdits échos par compensation du signal présent sur chaque voie sous la forme d'une fonction du signal venant du filtre, caractérisé par un moyen $(S_1, S_i, S_M)$, servant à faire commencer et à suspendre l'ajustement dudit coefficient du filtre de chaque voie en fonction du signal présent sur cette voie $(X_1-X_M$ et/ou $Y_1-Y_M)$.

2. Suppresseur d'échos selon la revendication 1, où des moyens sont prévus pour mesurer le niveau de signal présent sur une voie du trajet de sortie et pour suspendre l'ajustement dudit coefficient lorsque ledit signal est en deçà d'un seuil prédéterminé.

3. Suppresseur d'échos selon la revendication 1 ou 2, où des moyens sont prévus pour mesurer le niveau de signal sur une voie $(Y_1-Y_M)$ du trajet d'entrée et pour suspendre l'ajustement du coefficient du filtre lorsque le signal présent sur ce trajet est au-dessus d'un deuxième seuil prédéterminé.

4. Suppresseur d'échos selon la revendication 1, où des moyens sont prévus pour mesurer les signaux présents sur une voie des trajets de sortie et d'entrée et pour suspendre l'ajustement dudit coefficient parce qu'il y a un signal voulu sur la voie $(Y_1-Y_M)$ du trajet d'entrée et aucun signal voulu sur la voie $(X_1-X_M)$ du trajet de sortie.

5. Suppresseur d'échos selon la revendication 1, où des moyens sont prévus pour mesurer les signaux présents sur une voie des trajets de sortie et d'entrée et pour suspendre l'ajustement dudit coefficient lorsqu'il y a un signal voulu sur la voie du trajet de sortie et un signal voulu, autre que des échos, sur la voie du trajet d'entrée.

6. Suppresseur d'échos selon l'une quelconque des revendications précédentes, caractérisé en qu'il y de quatre à douze voies connectées au trajet de sortie et un nombre égal de voies dans le trajet d'entrée.

7. Suppresseur d'échos selon la revendication 6, où il y a de six à huit semblables voies.

8. Suppresseur d'échos selon la revendication 6 ou 7, où les voies couvrent un intervalle de fréquence allant d'environ de 250 Hz à environ 3 750 Hz, en sous-bandes approximativement égales.

9. Suppresseur d'échos selon l'une quelconque des revendications précédentes en combinaison avec un émetteur-récepteur fonctionnant en duplex, où le trajet de sortie comporte un haut-parleur (13) servant à la délivrance sous forme audio des signaux reçus, le trajet d'entrée comporte un microphone (16) servant à la réception sous forme audio de signaux en vue de leur émission, le suppresseur d'échos est destiné à supprimer les échos dans le microphone venant du haut-parleur, et le moyen servant à faire commencer et à suspendre l'ajustement du coefficient du filtre est conçu pour suspendre ledit ajustement pendant le fonctionnement en duplex.

10. Suppresseur d'échos et émetteur-récepteur selon la revendication 9, lorsqu'ils sont installés dans un véhicule.

FIG.1

$F I G. 2$